(19) Europäisches Patentamt / European Patent Office / Office européen des brevets

(11) **EP 3 071 934 B1**

(12) **FASCICULE DE BREVET EUROPEEN**

(45) Date de publication et mention de la délivrance du brevet:
**03.01.2018 Bulletin 2018/01**

(21) Numéro de dépôt: **14803092.7**

(22) Date de dépôt: **24.11.2014**

(51) Int Cl.:
*G01C 21/16* *(2006.01)*    *G01C 25/00* *(2006.01)*

(86) Numéro de dépôt international:
**PCT/EP2014/075439**

(87) Numéro de publication internationale:
**WO 2015/075248 (28.05.2015 Gazette 2015/21)**

(54) **PROCÉDÉ D'ALIGNEMENT D'UNE CENTRALE INERTIELLE**

AUSRICHTUNGSVERFAHREN FÜR EIN TRÄGHEITSNAVIGATIONSSYSTEM

ALIGNMENT PROCEDURE OF AN INERTIAL MEASURING UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.11.2013  FR 1302705**
**04.07.2014  FR 1401512**

(43) Date de publication de la demande:
**28.09.2016  Bulletin 2016/39**

(73) Titulaires:
• **Safran Electronics & Defense**
**92100 Boulogne-Billancourt (FR)**
• **Association Pour La Recherche Et Le Développement**
**De Méthodes Et Processus Industriels "Armines"**
**75006 Paris (FR)**

(72) Inventeurs:
• **BARRAU, Axel**
**F-92100 Boulogne-Billancourt (FR)**
• **BONNABEL, Silvère**
**F-75272 Paris Cedex 06 (FR)**

(74) Mandataire: **Regimbeau**
**20, rue de Chazelles**
**75847 Paris Cedex 17 (FR)**

(56) Documents cités:
**US-A1- 2004 150 557**

• **SILVERE BONNABEL ET AL: "Invariant Extended Kalman Filter: theory and application to a velocity-aided attitude estimation problem", DECISION AND CONTROL, 2009 HELD JOINTLY WITH THE 2009 28TH CHINESE CONTROL CONFERENCE. CDC/CCC 2009. PROCEEDINGS OF THE 48TH IEEE CONFERENCE ON, IEEE, PISCATAWAY, NJ, USA, 15 décembre 2009 (2009-12-15), pages 1297-1304, XP031620108, ISBN: 978-1-4244-3871-6**
• **BONNABEL S ET AL: "Symmetry-Preserving Observers", IEEE TRANSACTIONS ON AUTOMATIC CONTROL, IEEE SERVICE CENTER, LOS ALAMITOS, CA, US, vol. 53, no. 11, 1 décembre 2008 (2008-12-01), pages 2514-2526, XP011239478, ISSN: 0018-9286, DOI: 10.1109/TAC.2008.2006929**

## Description

DOMAINE GENERAL

L'invention se rapporte au domaine des centrales inertielles de navigation, et des procédés d'alignement de porteurs comprenant de telles centrales.

ETAT DE L'ART

On connaît de l'état de l'art de nombreuses solutions pour aligner un porteur comprenant une centrale inertielle.

Pour réaliser un alignement, on part d'un a priori sur la trajectoire approximative suivie. Par exemple, la trajectoire suivie par un porteur à l'arrêt en un point connu de la surface de la Terre est un mouvement nul si on se place dans le référentiel géographique et un mouvement de rotation autour de l'axe des pôles si on se place dans un référentiel inertiel attaché au centre de la Terre. Cette trajectoire n'est jamais exacte (une voiture subit les vibrations de son moteur, des mouvements verticaux lorsque des passagers entrent et sortent, etc.) mais toujours proche de la réalité. La solution classique d'alignement (utilisée également par la nouvelle méthode) consiste à considérer cette trajectoire a priori comme une mesure issue d'un capteur virtuel. Par exemple, pour un véhicule à l'arrêt muni d'une centrale inertielle, on considérera que l'on dispose d'un capteur de vitesse donnant toujours la réponse « zéro » si on s'est placé dans le repère géographique, et donnant la vitesse de la trajectoire a priori si on s'est placé dans un autre repère. On peut également considérer que l'on dispose d'un capteur de position donnant toujours la réponse « zéro » si on s'est placé dans le repère géographique, et donnant la position de la trajectoire a priori si on s'est placé dans un autre repère. On peut également utiliser les deux capteurs en même temps (puisqu'ils n'existent pas). On attribue à ce capteur virtuel un bruit de mesure qui correspond en réalité à notre propre incertitude sur la trajectoire. Par exemple, toujours dans le cas d'un porteur immobile, si on a choisi de s'aligner en utilisant une information de déplacement nul, un ajoutera un bruit dont l'écart-type est de quelques centimètres (l'appareil qui s'aligne peut en effet s'écarter de quelques centimètres de la trajectoire a priori, par exemple si on charge et décharge le coffre d'une voiture). C'est pour intégrer cette mesure (virtuelle) qu'intervient habituellement un filtre de type Kalman.

La mise en oeuvre d'un tel filtre de Kalman comprend typiquement une étape de propagation et une étape de mise à jour répétées dans le temps : l'étape de propagation calcule un état estimé du porteur et une incertitude relative à cet état estimé ; l'étape de mise à jour permet d'intégrer l'information a priori sur la trajectoire.

Cependant, ces étapes de propagation et de mise à jour font intervenir des équations non linéaires qui empêchent l'utilisation d'un filtre de Kalman classique.

Pour contourner une telle limitation, il a été proposé de mettre en oeuvre un filtre de Kalman dit « étendu » (FKE), dans lequel les matrices utilisées dans les équations non-linéaires correspondant aux étapes de propagation et de mise à jour font l'objet d'une linéarisation, par un développement à l'ordre 1 en un point donné de l'espace vectoriel associé au vecteur d'état choisi.

Il a notamment été proposé dans le document EP 1 862 764 un procédé d'alignement mettant en oeuvre des filtres de Kalman étendus, et reposant sur l'intégration d'une information de déplacement ou de vitesse faible. Au cours de la mise en oeuvre de ce procédé, la trajectoire du porteur est calculée à partir de données inertielles et d'une estimation de son orientation, puis l'observation (virtuelle) d'une vitesse ou d'un déplacement nul (à un bruit près) est intégrée au moyen d'un filtre de Kalman étendu.

Or, un tel procédé d'alignement ne fonctionne que si le point en lequel le développement à l'ordre 1 réalisé pour linéariser les équations du filtre de Kalman étendu est suffisamment précis ; l'erreur d'estimation induite par ce développement doit en effet être faible (quelques degrés au maximum). Si le point de linéarisation n'est pas suffisamment précis, les calculs réalisés par le filtre de Kalman étendu au cours des étapes de propagation et de mise à jour peuvent conduire à terme à des estimations faussées.

Le document US 2004/150557 A1 divulgue un procédé d'alignement comprenant: une propagation déterminant un état estimé courant à partir d'un état estimé précédent et des mesures des capteurs inertiels d'un porteur mobile et une mise à jour de l'état estimé grâce à l'information a priori sur la trajectoire du porteur.

Deux étapes préliminaires ont été proposées pour déterminer un point de linéarisation précis lors de la mise en oeuvre d'un filtre de Kalman étendu appliqué à l'alignement d'un porteur :

- une recherche de verticale, au cours de laquelle est estimée la verticale en considérant que l'accéléromètre observe la gravité (2 secondes environ),
- une recherche d'un cap grossier, au cours de laquelle est estimé le cap par une méthode de filtrage s'appuyant sur un modèle simplifié (1 minute environ).

Ces étapes préliminaires sont non seulement longues et complexes à exécuter, mais ne protègent pas la centrale inertielle contre des divergences futures (l'estimation du filtre s'éloigne de l'état réel).

PRESENTATION DE L'INVENTION

L'invention vise donc à permettre l'alignement d'un porteur de façon plus précise et plus rapide qu'avec les techniques de l'art antérieur citées.

Il est proposé un procédé d'alignement d'un porteur mobile dans un repère inertiel selon la revendication 1.

Les capteurs inertiels (accéléromètre et gyroscope ou gyromètre par exemple) mesurent une accélération et une vitesse angulaire, toutes deux exprimées dans le repère de la centrale. Ces données interviennent dans l'étape de propagation : l'état estimé courant (orientation, vitesse et éventuellement position) est alors obtenu en intégrant les vitesses angulaires mesurées par les gyroscopes ou gyromètres (mise à jour de l'orientation) et les accélérations mesurées par les accéléromètres (mise à jour de la vitesse).

Ces accélérations sont tout d'abord projetées dans le repère de travail en utilisant l'orientation estimée, puis on leur retranche la gravité car l'accéléromètre n'est pas capable de différentier cette force d'une accélération. Si on souhaite estimer une position, on peut intégrer les vitesses obtenues, cette opération faisant aussi partie de la propagation.

L'étape de mise à jour est l'intégration de l'information de vitesse ou de position donnée par le capteur virtuel. Cette information (issue de l'a priori sur la trajectoire) est appelée « information de vitesse nulle » ou « information de déplacement nul ». Cette étape met à jour l'ensemble des données (orientation/vitesse/position) à partir de l'information de vitesse ou de position. En effet, l'information de vitesse/déplacement nul(le) contient une information implicite sur l'orientation.

Si l'on suppose dans un premier temps que l'orientation est bien estimée, l'accéléromètre mesure dans son référentiel une grandeur égale à la somme de l'accélération réelle et de la gravité. La centrale étant à l'arrêt, l'accélération réelle sera très faible et la mesure contiendra presque uniquement la gravité. Pendant l'étape de propagation, l'accélération mesurée est projetée dans le repère inertiel (ou le repère de travail) à l'aide de la matrice d'orientation estimée. La grandeur obtenue est la gravité, exprimée cette fois dans le repère inertiel (ou le repère de travail). On soustrait la gravité (connue) et on obtient une accélération très proche de zéro. Cette grandeur est intégrée au cours du temps et on obtient une vitesse elle aussi très faible.

Si l'on suppose toutefois que l'orientation estimée est penchée de quelques degrés vers l'est par rapport à la réalité, lorsque les informations d'accélération sont projetées dans le repère inertiel en utilisant cette estimation fausse de l'orientation, le vecteur obtenu ne coïncide pas avec la gravité. Une fois soustraite la gravité (connue) on obtient un vecteur non nul, pointant vers l'ouest. Après intégration au cours du temps, on obtient donc une vitesse non nulle dirigée vers l'ouest. Une mauvaise orientation a donc une influence sur l'estimation de vitesse. Réciproquement, une vitesse non nulle au moment de la mise à jour s'interprète comme une erreur d'orientation. C'est ce que fait un filtre de Kalman (étendu, invariant ou autre). Ainsi, la mise à jour réclame seulement l'acquisition de l'information (virtuelle) « de vitesse nulle » ou « de déplacement nul », mais pas de mesure de vitesse réelle ni d'orientation. Cette mesure (virtuelle) est suffisante pour retrouver l'orientation de la centrale.

Selon un aspect du procédé proposé, pour permettre un traitement par un filtre de Kalman invariant, on met en oeuvre un mode simplifié dans lequel chaque vitesse intervenant dans les équations de mise à jour est exprimée dans un repère de travail translaté par rapport au repère inertiel et dont l'origine se déplace le long d'une trajectoire inertielle de référence dont le porteur est supposé proche, les biais des capteurs n'étant pas estimés lors d'étapes de propagation et de mise à jour.

Dans un mode de réalisation, la trajectoire inertielle de référence est construite à partir d'une information a priori qui n'est pas mesurée par les capteurs inertiels.

L'origine peut être celle du repère géographique (pour l'alignement au sol en position connue, par exemple) ; elle peut correspondre à la trajectoire GPS (pour un alignement en vol, par exemple).

Avantageusement également, on met en oeuvre en parallèle un traitement dans lequel on estime des grandeurs supplémentaires influant sur l'estimation de la façon suivante :

- à chaque instant, la différentielle par rapport aux grandeurs supplémentaires de l'estimation fournie par le mode simplifié est calculée récursivement.
- les grandeurs supplémentaires sont calculées par optimisation d'un critère de qualité de l'estimation.

Le calcul différentiel mis en oeuvre permet d'exprimer l'état estimé du porteur comme une fonction affine des grandeurs supplémentaires.

Selon un autre aspect, il est également proposé une centrale inertielle mobile dans un repère inertiel et comprenant :

- une pluralité de capteurs inertiels,
- un filtre de Kalman invariant,

ladite centrale comportant un calculateur embarqué mettant en oeuvre le procédé d'alignement proposé.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente une centrale inertielle selon un mode de réalisation de l'invention.
- La figure 2 représente une centrale inertielle selon un mode de réalisation de l'invention.
- Les figures 3A et 3B sont des schémas de principe d'un filtre de Kalman étendu et d'un filtre de Kalman invariant, respectivement.
- La figure 4 représente les étapes d'un procédé d'alignement d'une centrale inertielle, selon un mode de réalisation de l'invention.
- Les figures 5A et 5B sont des courbes d'alignement de cap obtenus par mise en oeuvre de procédés selon des modes de réalisations de l'invention, et par mise en oeuvre d'un procédé connu.
- Les figures 6A et 6B sont des courbes comparatives d'erreur de cap obtenues par mise en oeuvre du procédé de l'invention, la figure 6B étant une vue rapprochée de 6A.
- La figure 7 illustre, à titre comparatif, le déroulement dans le temps d'une part une méthode mettant en oeuvre un mode d'alignement simplifié et un mode complet et d'autre part d'une méthode de type classique.

Sur l'ensemble des figures, les éléments similaires portent des références identiques.

## DESCRIPTION DETAILLEE DE L'INVENTION

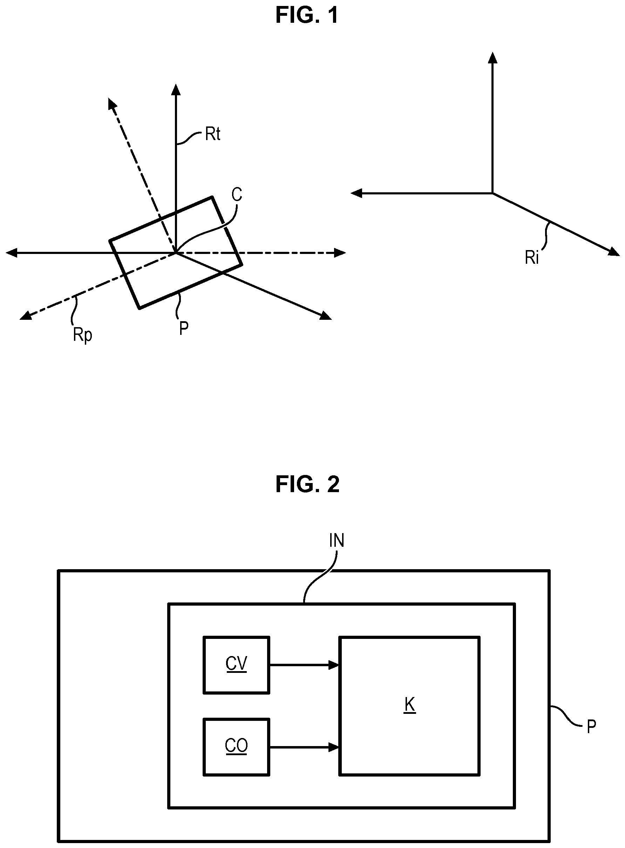

En référence à la figure 1, un porteur P est mobile dans un référentiel inertiel prédéterminé défini par un repère inertiel Ri.

Un exemple de repère inertiel est le repère centré sur le centre de la Terre, dont l'axe z pointe vers le pôle nord, dont l'axe x pointe vers l'intersection du méridien de Greenwich et de l'équateur au temps t=0 (le point ainsi défini va ensuite se déplacer dans notre repère à cause de la rotation de la Terre) et dont l'axe y pointe dans la direction du vecteur $z \times x$, x désignant le produit vectoriel).

Le repère porteur Rp est fixe par rapport à la centrale. Par exemple, les axes utilisés le plus fréquemment sont dirigés vers l'avant, la droite et le bas de la centrale. Son origine est un point fixe de la centrale. Le repère géographique Rg a pour origine la position de la centrale et est composé de trois axes dirigés vers le nord, l'ouest et le haut.

Est également représenté un repère Rt dit « repère de travail », qui est le repère en translation par rapport au repère inertiel Ri (c'est-à-dire que d'axes alignés avec les axes du repère inertiel Ri) dont l'origine C est celle du repère géographique Rg.

En référence à la figure 2, le porteur P comprend une centrale inertielle IN.

La centrale inertielle IN comprend une pluralité de capteurs inertiels CV, CO et un calculateur configuré pour mettre en oeuvre un filtre de Kalman invariant K.

La centrale inertielle IN est supposée fixe par rapport au repère de travail Rt.

La pluralité de capteurs comprend au moins un capteur d'accélération CV (par exemple, un accéléromètre) et au moins un capteur de vitesse angulaire CO (par exemple, un gyroscope ou un gyromètre).

Le filtre de Kalman invariant K est un estimateur récursif d'un état du porteur, cet état étant représentatif de la vitesse de ce porteur et de son orientation.

Le filtre de Kalman invariant K est plus particulièrement configuré pour déterminer un état estimé courant du porteur à partir d'un état estimé précédent du porteur au moyen d'équations de propagation prédéfinies : on parle alors de propagation.

Les équations de propagation sont prédéterminées à partir des mesures des capteurs inertiels.

Le filtre de Kalman invariant K est également configuré pour mettre à jour l'état estimé courant au moyen d'équations de mise à jour prédéfinies, dans lesquelles intervient l'information a priori sur la trajectoire (par exemple l'information de vitesse faible).

Le filtre de Kalman invariant K est en outre configuré pour que chaque vitesse intervenant dans l'équation de mise à jour soit exprimée dans le repère de travail.

La centrale IN peut par exemple construire son repère de travail aux moyens de récepteurs GNSS/GPS.

L'étape qui va maintenant être décrite est répétée à partir du premier instant de la procédure d'alignement.

La première estimation $\hat{x}_0$ est quelconque. On suppose qu'une estimation précédente de l'état x, notée $\hat{x}_{t-1}$, a déjà été déterminée, ainsi qu'une matrice P représentant l'incertitude de l'estimation.

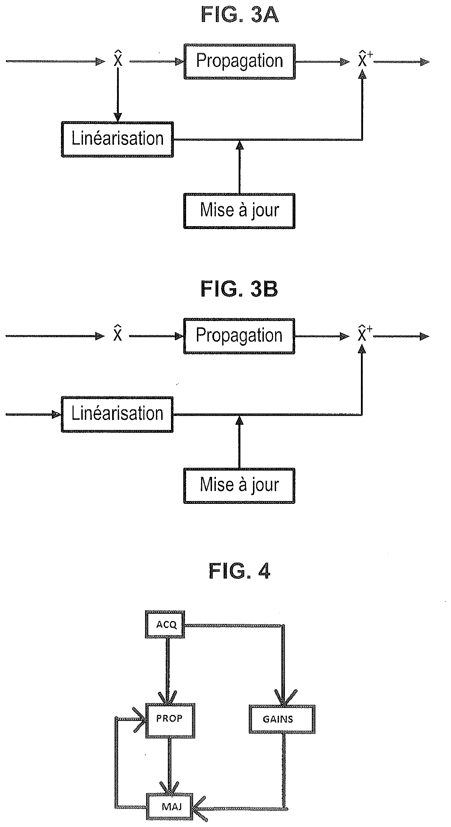

En référence à la figure 3A, la détermination d'une estimation courante $\hat{x}^+$ par un filtre de Kalman étendu connu dépend de l'estimation précédente $\hat{x}$ (moyennant une étape de propagation) et de mesures acquises au cours de l'itération courante (moyennant des étapes de linéarisation et de mise à jour)

Le calcul de $\hat{x}^+$ fait intervenir une matrice de gain L dépendant elle-même de la valeur de $\hat{x}$.

L'introduction du repère de travail Rt et d'un modèle simplifié ignorant les biais de capteurs permet ici l'utilisation d'un filtre invariant.

En référence à la figure 3B, un filtre de Kalman invariant calcule l'estimation courante $\hat{x}^+$ de l'état de façon différente d'un filtre de Kalman étendu ordinaire, au moyen d'équations choisies de manière particulière (ces équations seront détaillées plus loin).

L'état du porteur peut être représenté soit de façon classique par une vitesse v et une orientation T (T est une matrice de rotation ou un quaternion), soit par une matrice de déplacement $\chi$ de la forme :

$$\chi = \begin{pmatrix} T & v \\ 0 & 1 \end{pmatrix}$$

D'autres représentations sont bien entendu possibles.

On notera ici que le nom de « matrice de déplacement » ne représente pas nécessairement un déplacement. Il vient de l'usage qui en était fait quand elles ont été introduites pour des problèmes de robotique (elles contenaient alors une orientation et une position et représentaient bien un déplacement).

On appelle P l'incertitude d'estimation de l'état x. Une propriété intéressante du filtre invariant K est que la matrice de gain L intervenant dans l'étape de mise à jour ne dépend pas de l'estimation précédente $\hat{x}$.

Ainsi, on a construit un système simplifié permettant l'usage d'un filtre de Kalman invariant (et donc une convergence sans étapes de recherche de verticale et d'alignement grossier), ayant les caractéristiques suivantes : 1) On travaille dans un repère inhabituel. 2) La part déterministe des erreurs des capteurs inertiels (biais / dérives / erreurs de facteurs d'échelle) sont ignorés.

Dans un mode de réalisation, la gravité utilisée dans les équations de propagation est considérée comme dépendant seulement du temps et non de la position, ce qui permet de simplifier les calculs de résolution de ces équations.

La méthode d'alignement fin classique ne passe pas par un modèle simplifié. Elle intègre directement l'ensemble des variables dans le modèle, ce qui ne permet pas l'usage d'un IEKF.

L'étape de mise à jour d'un IEKF pour l'alignement s'écrit soit avec des matrices de déplacement, soit avec les variables initiales v et T du référentiel de travail (en les extrayant des matrices de déplacement) :

- $\hat{v}^+ = K_v(\hat{v}) + K_\xi(\hat{v})\hat{v}$
- $\hat{T}^+ = K_\xi(\hat{v})\hat{T}$
- $K_\xi$ et $K_v$ sont des fonctions issues de la carte exponentielle définie plus bas, telles que $exp(L_t x) = \begin{pmatrix} K_\xi(x) & K_v(x) \\ 0_{1 \times 3} & 1 \end{pmatrix}$ où $L_t$ est une matrice dépendant de $P$.

- $P$ suit une équation dépendant seulement du temps. Celle-ci est obtenue en linéarisant les équations vérifiées par $\delta v = \hat{v} - \hat{T}T^{-1}v$ et $\delta T = \hat{T}T^{-1}$ atour de 0 et $I_3$ (la matrice identité de taille $3 \times 3$).

La carte exponentielle *exp* est définie pour $u \in \mathbb{R}^6$ par $exp(u) = expm(D(u))$ où *expm* désigne l'exponentielle matricielle classique et où $D()$ est l'application linéaire prenant en argument un vecteur $x = \begin{pmatrix} x_1 \\ x_2 \end{pmatrix}$ de taille $6 \times 1$ et rendant la matrice de déplacement élémentaire $\begin{pmatrix} A(x_1) & x_2 \\ 0 & 1 \end{pmatrix}$ de taille $4 \times 4$, $A(x_1)$ désignant la matrice antisymétrique telle que pour tout vecteur $u \in \mathbb{R}^3$, $A(x_1)u = x_1 \times u$, $\times$ étant le produit vectoriel.

Les matrices du type $D(u)$ ayant une forme particulière on peut utiliser la formule fermée suivante :

$$\exp\begin{pmatrix}u_1\\u_2\end{pmatrix} = I_4 + D\begin{pmatrix}u_1\\u_2\end{pmatrix} + \frac{[1-\cos|u_2|]}{|u_2|^2}D\begin{pmatrix}u_1\\u_2\end{pmatrix}^2 + \frac{[|u_2|-\sin|u_2|]}{|u_2|^3}D\begin{pmatrix}u_1\\u_2\end{pmatrix}^3.$$

Dans un mode de mise en oeuvre, le calcul qui vient d'être décrit est itéré jusqu'à convergence (mode simplifié).

En variante (mode complet), il est également possible d'estimer des grandeurs supplémentaires (biais, dérives, erreurs de facteurs d'échelle, etc.) par le procédé décrit ci-dessous.

Une fois construit ce filtre réduit, on calcule depuis le premier instant de la procédure d'alignement la différentielle de la trajectoire estimée par rapport aux paramètres restants (biais / dérives / erreurs de facteurs d'échelle), autour de la valeur nulle de ces paramètres. La trajectoire estimée s'exprime alors comme une fonction affine des paramètres. Un critère quadratique de qualité de la trajectoire estimée (par exemple la somme des carrés des normes des vitesses estimées au cours du temps) est choisi. Ce critère est alors une fonction quadratique des paramètres (biais / dérives / erreurs de facteurs d'échelle), que l'on optimise facilement pour obtenir leur valeur. Cette méthode permet de préserver les propriétés de convergence du filtre construit pour le système simplifié même si on augmente le nombre de paramètres estimés. Cette optimisation peut être faite récursivement au cours du temps, une seule fois à la fin de l'alignement, ou encore à des instants quelconques au cours de l'alignement. Ce choix n'a aucune influence sur l'estimation. Dans tous les cas, le filtrage du système simplifié et du système complet sont simultanés.

Dans les méthodes employant un alignement grossier, celui-ci est également réalisé sur un système simplifié (différent de celui présenté ici) mais le découpage est temporel : 1 min d'alignement grossier puis un alignement fin. Ici les deux modèles fonctionnent simultanément du début à la fin : à chaque instant le filtre simplifié donne son estimation, puis l'optimisation quadratique calcule l'état complet (sans filtrage de Kalman) comme une perturbation de l'état simplifié. Le calcul de la différentielle de la trajectoire est réalisable en un temps raisonnable parce que la matrice P suit une équation dépendant seulement du temps (IEKF). Si le système simplifié n'était pas par un IEKF, cette dernière étape d'estimation des paramètres ignorés dans un premier temps ne serait pas possible.

*Procédé d'alignement de centrale inertielle*

Un procédé d'alignement de la centrale inertielle IN (et donc du porteur P) mettant en oeuvre le filtre de Kalman invariant K va maintenant être décrit en référence à la figure 4.

Dans une étape d'acquisition ACQ, la trajectoire du repère de travail $R_t$ est mise à jour grâce à l'information a priori concernant la trajectoire.

Dans une étape de propagation PROP, le filtre de Kalman K détermine un état estimé courant à partir d'un état estimé précédent, au moyen des mesures de ses capteurs inertiels CO, CV.

Dans une étape de mise à jour MAJ, le filtre de Kalman K met à jour l'état estimé du porteur au moyen de l'observation virtuelle de vitesse nulle (ou de déplacement nul).

Les étapes d'acquisition ACQ, de propagation PROP, et de mise à jour MAJ sont répétées dans le temps.

Le procédé d'alignement comporte donc plusieurs itérations successives, chaque nouvelle itération prenant en entrée l'état estimé mis à jour obtenu au cours d'une itération précédente, et de nouvelles observations (acquises au cours de l'étape d'acquisition de cette nouvelle itération).

Un produit programme d'ordinateur comprenant des instructions de code de programme pour l'exécution des étapes du procédé décrit, lorsque ce programme est exécuté par un calculateur embarqué dans une centrale inertielle, peut par ailleurs être mis en oeuvre.

*Formalisation générale du problème d'alignement*

À titre préliminaire, les notations suivantes seront utilisées dans la suite.

| | |
|---|---|
| $T_{\left[\frac{i}{m}\right]}$ | Matrice de passage du repère de mesure vers le repère inertiel |
| $v_i$ | Vitesse du porteur dans le repère inertiel |
| $x_i$ | Position du porteur dans le repère inertiel |
| $\omega$ | Mesures du gyroscope ou du gyromètre |
| $f$ | Mesures de l'accéléromètre |
| $G$ | Attraction terrestre subie par le porteur |

(suite)

| | |
|---|---|
| $w_\omega$ | Bruit du gyroscope ou du gyromètre (« random walk » en anglais) |
| $w_f$ | Différence entre l'incrément de vitesse mesuré et l'incrément de vitesse réel |

La formulation classique de l'alignement par observation de vitesse nulle dans un référentiel inertiel est la suivante.

On suppose que la position du porteur est approximativement connue. La conséquence de cette hypothèse, dont le procédé tire parti, est que la gravité locale est connue et ne sera plus qu'une fonction du temps.

Les équations de mouvement s'écrivent :

$$\dot{T}_{\left[\frac{i}{m}\right]} = T_{\left[\frac{i}{m}\right]} A(\omega + w_\omega)$$

$$\dot{v}_i = T_{\left[\frac{i}{m}\right]}\left(f + w_f\right) + G$$

$$\dot{x}_i = v_i$$

Où $A(.)$ désigne la matrice antisymétrique associée à un vecteur de rotation (définie par la relation $\forall\, u_1, u_2 \in \mathbb{R}^3$, $A(u_1)u_2 = u_1 \times u_2$ où $\times$ est le produit vectoriel),

Une mesure virtuelle de vitesse ($w_h$ est un bruit) est:

$$h\left(T_{\left[\frac{i}{m}\right]}, v_i\right) = v_i + w_h$$

On introduira à intervalles réguliers l'information $h\left(T_{\left[\frac{i}{m}\right]}, v_i\right) + w_h = V_i$, où $V_i$ est la vitesse attendue du porteur P liée à la trajectoire a priori, par exemple à celle due à la rotation terrestre (il est simplement exprimé dans le référentiel inertiel l'observation de vitesse nulle faite habituellement dans le référentiel géographique).

*Reformulation des équations de mouvement dans le repère de travail*

Dans cette partie sont détaillées les équations de propagation et de mises à jour mises en oeuvre dans un mode de réalisation de l'invention.

Le repère de travail Rt (également référencé C dans la suite) est comme défini précédemment en translation par rapport au repère inertiel Ri (c'est-à-dire que ses axes sont alignés avec les axes du repère inertiel Ri), et son origine *C* est celle du repère géographique g.

On introduit les notations suivantes :

| | |
|---|---|
| $T_{\left[\frac{C}{m}\right]}$ | Matrice de passage du repère de mesure vers le repère C |
| $x_C = x_i - C$ | Position du porteur dans le repère *C* |
| $v_C = \dot{x}_C = v_i - \dot{C} = v_i - V_i$ | Vitesse du porteur dans le repère C |
| $a = \overline{C}$ | Accélération dans le référentiel inertiel de l'origine c du repère C |

Les équations de mouvement du porteur P se réécrivent dans le repère de travail Rt comme suit :

$$\dot{T}_{\left[\frac{c}{m}\right]} = T_{\left[\frac{c}{m}\right]} A(\omega + w_\omega)$$

$$\dot{v}_C = T_{\left[\frac{c}{m}\right]} \left(f + w_f\right) + G - a$$

$$\dot{x}_C = v_C$$

La position $x_c$ du porteur n'ayant pas d'influence sur les autres paramètres, on peut donc la supprimer :

$$\dot{T}_{\left[\frac{c}{m}\right]} = T_{\left[\frac{c}{m}\right]} \omega$$

$$\dot{v}_C = T_{\left[\frac{c}{m}\right]} f + G - a$$

L'information de vitesse nulle est également modifiée comme suit :

$$h\left(T_{\left[\frac{c}{m}\right]}, v_C\right) = T_{\left[\frac{c}{m}\right]}^T v_C = 0 + bruit$$

L'état du porteur P estimé par le filtre de Kalman invariant K peut être représenté par une matrice de déplacement constituée à partir d'une matrice de passage du repère géographique vers le repère de travail, et de la vitesse du porteur mesurée exprimée dans le repère de travail, la matrice de déplacement étant construite comme suit :

$$X = \begin{pmatrix} T_{\left[\frac{c}{m}\right]} & v_C \\ 0 & 1 \end{pmatrix}$$

Bien entendu, en variante, l'état du porteur pourrait également être représenté de façon classique, par exemple une matrice T et un vecteur v.
Les mesures inertielles et les informations de gravité sont écrites dans des matrices de déplacement élémentaire :

$$i = \begin{pmatrix} A(\omega) & f \\ 0 & 0 \end{pmatrix}$$

$$w = \begin{pmatrix} A(w_\omega) & w_f \\ 0 & 0 \end{pmatrix}$$

$$g = \begin{pmatrix} 0 & G - a \\ 0 & 0 \end{pmatrix}$$

Les équations se réécrivent alors plus simplement :

$$\dot{\chi} = \chi.i + g.\chi + \chi.w$$

La fonction d'observation s'écrit elle aussi simplement :

$$h(\chi) = \chi^{-1} \begin{pmatrix} w_h \\ 1 \end{pmatrix}$$

Une propriété de **h** appelée « équivariance gauche-droite », sur laquelle repose le filtrage invariant est la suivante. Soit Ø une matrice de déplacement quelconque (c'est-à-dire de la forme $\begin{pmatrix} R & u \\ 0 & 1 \end{pmatrix}$ où $R$ est une matrice (3 × 3) orthogonale et u un vecteur quelconque de $\mathbf{R}^3$). On a :

$$h(\chi\emptyset) = (\chi\emptyset)^{-1} \begin{pmatrix} w_h \\ 1 \end{pmatrix} = \emptyset^{-1} \chi^{-1} \begin{pmatrix} w_h \\ 1 \end{pmatrix} = \emptyset^{-1} h(\chi)$$

On peut interpréter ce qui précède comme un changement de variable sur l'espace d'états (on remplace $\chi$ par $\chi\emptyset$) associé à un changement de variable sur l'espace des observations. Le terme « invariant » vient du fait que le filtre est conçu pour être insensible à ce type de reparamétrage.

Un observateur adapté à la dynamique qui précède est le suivant:

$$\dot{\hat{\chi}} = \hat{\chi}.i + g.\hat{\chi}$$

L'étape de mise à jour MAJ est typiquement de la forme suivante :

$$\hat{\chi}^+ = K_t(\hat{\chi}Y)\hat{\chi}$$

où $\hat{\chi}$ est la matrice de déplacement estimée courante, $K_n$ une fonction de gain (également appelé gain), $Y$ un vecteur représentant l'observation virtuelle de vitesse nulle, et $\hat{\chi}^+$ est une matrice de déplacement estimée résultant de la mise à jour.

La fonction $K_t$ correspond à la t-ième observation de vitesse nulle (et donc la t-ième itération du filtre de Kalman) et est de la forme $K_t(u) = exp(L_t u)$, où $exp()$ désigne la fonction appelée carte exponentielle (« exponential map » en anglais). $K_t$ est une fonction mais $L_t$ est une matrice, dite « matrice de gain » ou plus simplement « gain ». La méthode de calcul des gains est détaillée ci-dessous. Les matrices $L_t$ sont calculées en linéarisant l'équation vérifiée par la variable d'erreur $\eta = \hat{\chi}\chi^{-1}$. Le calcul de l'équation vérifiée par $\eta$ est le suivant :

Lors de l'étape de propagation, les équations d'évolution de $\chi$ et $\hat{\chi}$ sont connues et on peut donc calculer l'équation d'évolution de $\eta$ :

$$\dot{\eta} = \left(\frac{d}{dt}\hat{\chi}\right)\chi^{-1} + \hat{\chi}\left(\frac{d}{dt}\chi^{-1}\right) = \left(\frac{d}{dt}\hat{\chi}\right)\chi^{-1} - \hat{\chi}\chi^{-1}\left(\frac{d}{dt}\chi\right)\chi^{-1}$$

En introduisant les équations vérifiées par $\hat{\chi}$ et $\chi$ et en utilisant le fait que $v_c$ est petit, on obtient :

$$\dot{\eta} = \boldsymbol{g}\eta - \eta\boldsymbol{g} - \eta\boldsymbol{w}$$

C'est la partie continue de l'évolution de la variable d'erreur. Lorsque l'estimation $\hat{\chi}$ est mise à jour, la variable d'erreur évolue de façon discontinue. L'évolution de la variable d'erreur lors de la mise à jour de l'estimation est particulièrement simple :

$$\eta^+ = \hat{\chi}^+\chi^{-1} = K_t(\hat{\chi}Y)\hat{\chi}\chi^{-1} = K_t\big(h(\hat{\chi}\chi^{-1}, w_h)\big)\hat{\chi}\chi^{-1} = K_t\big(h(\eta, w_h)\big)\eta$$

La linéarisation de cette équation se fait de la façon suivante : La carte exponentielle prend en argument un vecteur de $\mathbb{R}^6$ et rend une matrice de déplacement. En particulier, l'image du vecteur nul est la matrice identité $I_4$.

On peut donc faire correspondre aux variables d'erreur des vecteurs de $\mathbb{R}^6$ $\xi$ et $\xi^+$ ($\eta = exp(\xi)$, $\eta^+ = exp(\xi^+)$), écrire l'équation vérifiée par $\xi$ et $\xi^+$ et la linéariser autour de 0. L'équation obtenue fait intervenir les matrices de gains $L_t$ :

$$\dot{\xi} = ad_{g_t}\xi + \begin{pmatrix} w_\omega \\ w_f \end{pmatrix}$$

$$\xi^+ = \xi - L_t(H\xi + w)$$

avec $ad_{g_t} = \begin{pmatrix} 0_3 & 0_3 \\ A(g_t) & 0_3 \end{pmatrix}$, $0_3$ étant la matrice $3 \times 3$ ne contenant que des zéros, et $H = \begin{pmatrix} 0_3 \\ I_3 \end{pmatrix}.$

Cette équation est linéaire et on peut calculer simultanément la covariance $P_t$ de $\xi$ et les gains $L_t$ permettant de minimiser $P_t$ grâce à l'équation de Riccati :

$$\dot{P}_t = ad_{g_t}P_t + P_t \, ad_{g_t}^T + Q$$

$$S_t = HP_{t_t}H^T + R$$

$$L_t = P_{t_t}H^T S_t^{-1}$$

$$P_{t_t}^+ = (I_6 - L_tH)P_{t_t}$$

où $Q$ est la matrice de covariance du bruit $\begin{pmatrix} w_\omega \\ w_f \end{pmatrix}$ et $R$ la matrice de covariance du bruit $w_h$.

*Résultats comparatifs d'alignement*

Sont comparés dans ce qui suit des résultats obtenus avec le procédé d'alignement qui vient d'être décrit (à base d'un filtre de Kalman invariant) et des résultats obtenus avec un procédé d'alignement connu (à base d'un filtre de Kalman étendu classique et mis en oeuvre dans une centrale classique).

Les variables traitées par les filtres de Kalman sont l'orientation (attitude) du porteur et sa vitesse. La position du porteur est considérée connue à une centaine de mètres près. Les capteurs utilisés sont supposés sans biais, et les observations utilisées sont des vitesses nulles. La verticale du porteur est connue à 30 degrés près, et son cap totalement inconnu.

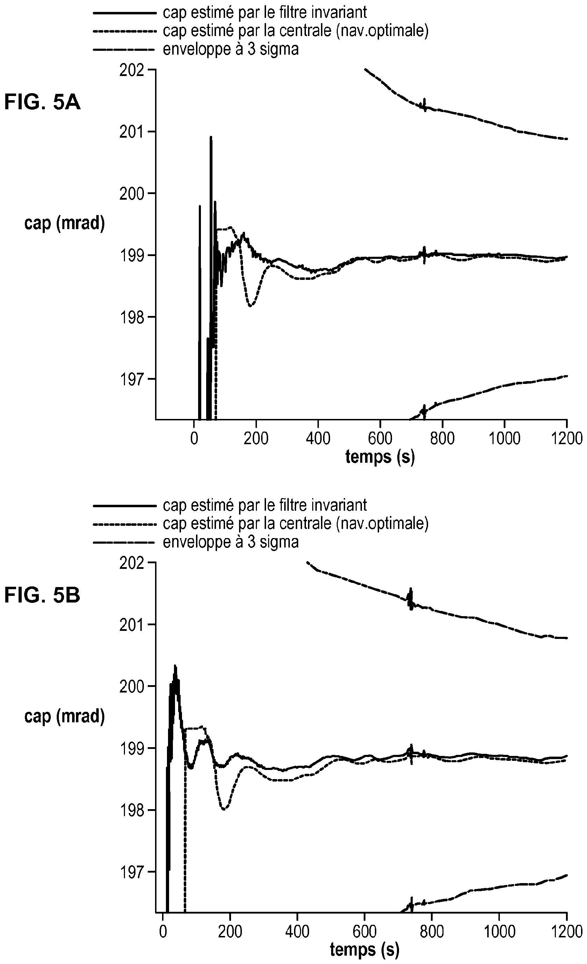

Les **figures 5A et 5B** comparent chacune les vitesses de convergence respective des deux procédés d'alignement, et présente des estimations de cap fournies par les deux procédés.

Dans l'exemple illustré sur la figure 5A, l'intégration de l'information de vitesse nulle est faite à basse fréquence. On observe qu'au bout de 200 secondes, le procédé d'alignement selon l'invention (courbe bleue) fournit une estimation de cap très proche de sa valeur réelle, alors que l'estimation de cap fournie par la méthode classique (courbe verte) continue d'osciller.

Dans la situation étudiée, les gains utilisés dans l'étape de mise à jour peuvent être calculés à l'avance si l'on connaît la latitude. Le filtre est alors très peu coûteux en temps de calcul et on peut envisager d'intégrer l'information de vitesse nulle à haute fréquence, comme illustré sur la figure 5B. La figure suivante présente les conséquences de ce choix dans les la même situation que précédemment. La convergence est ici bien plus rapide avec le procédé proposé qu'avec le procédé de l'art antérieur.

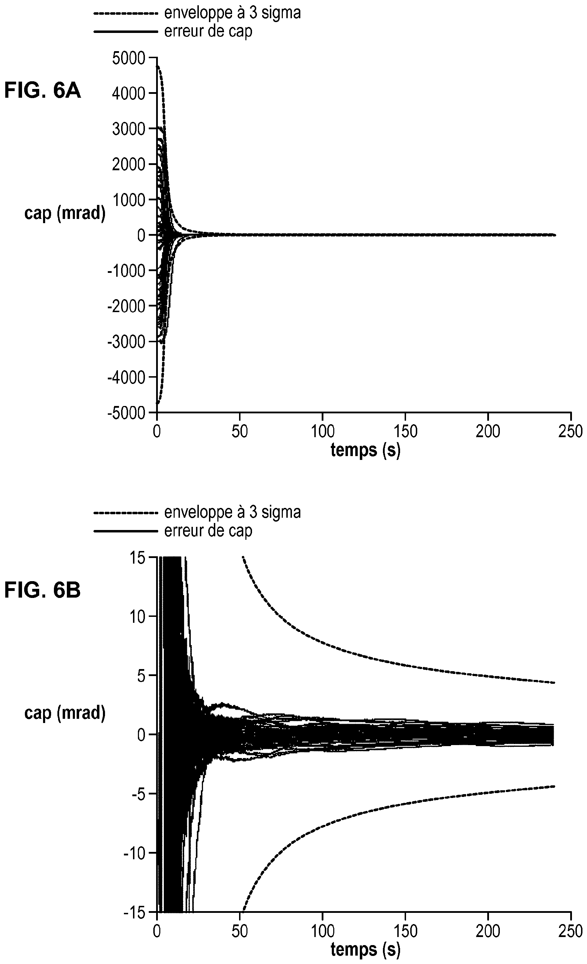

Les **figures 6A et 6B** étudient l'influence de l'estimation a priori du cap sur les résultats du procédé d'alignement de l'invention.

Des estimations de cap ont été tirées aléatoirement selon une loi uniforme sur $[0,2\pi]$ puis l'algorithme a fonctionné normalement pendant 240 secondes.

On observe sur la figure 6A que l'erreur de cap devient très rapidement proche de zéro quelle que soit l'initialisation lors de la mise en oeuvre du procédé selon l'invention. La figure 6B est un zoom de la figure 6A.

*Mode complet mis en oeuvre en parallèle au mode simplifié*

Le mode simplifié qui vient d'être décrit est avantageusement complété par un mode complet qui est mis en oeuvre en parallèle au mode simplifié.

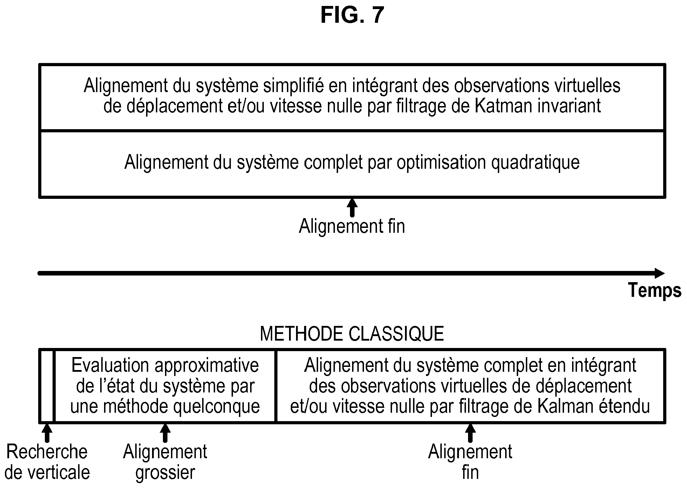

C'est ce qu'illustre la figure 7, sur laquelle sont représentées le déroulement dans le temps d'une part d'une méthode mettant en oeuvre un mode d'alignement simplifié et un mode complet et d'autre part d'une méthode de type classique

Ce mode complet permet un alignement par optimisation quadratique.

Il permet d'estimer des grandeurs supplémentaires influant sur l'estimation de la façon suivante :

- à chaque instant, la différentielle par rapport aux grandeurs supplémentaires de l'estimation fournie par le mode simplifié est calculée récursivement.
- les grandeurs supplémentaires sont calculées par optimisation d'un critère de qualité de l'estimation.

Le calcul des grandeurs supplémentaires par optimisation d'un critère de qualité peut être mis en oeuvre à la fin dudit procédé d'alignement. Il peut également être mis en oeuvre de façon permanente ou encore de façon simplifiée, à tout instant du procédé d'alignement.

Le calcul différentiel mis en oeuvre permet d'exprimer l'état estimé du porteur comme une fonction affine des grandeurs supplémentaires.

Par comparaison, la méthode classique met en oeuvre successivement :

- Un traitement de recherche de verticale ;
- Une évaluation approximative de l'état du système (alignement grossier) ;
- Un alignement du système complet en intégrant des observations virtuelles de déplacement et/ou vitesse nulle par filtrage de Kalman étendu).

Dans le cas proposé, un exemple de mise en oeuvre d'un mode complet par optimisation quadratique est le suivant :

Si les mesures des capteurs inertiels subissent une perturbation déterministe liée à des grandeurs supplémentaires (biais, dérives, erreurs de facteurs d'échelle, etc.), représentées par un vecteur $\beta$, qui doivent être évaluées au cours de l'alignement, celles-ci ne sont pas intégrées au filtre de Kalman comme dans les méthodes classiques. La procédure suivante est utilisée :

Pour toute valeur donnée de $\beta$ on peut corriger les mesures inertielles (soustraire les biais-dérives donnés par béta, diviser par le facteur d'échelle, etc.) puis appliquer le mode simplifié aux mesures corrigées. L'estimation obtenue est une fonction $\hat{x}(\beta)$ des grandeurs supplémentaires. Cette grandeur n'est pas calculée car on ne connaît pas $\beta$.

On choisit une valeur de référence $\beta_0$ de la grandeur $\beta$, seule l'estimation $\hat{x}(\beta_0)$ sera réellement calculée.

On choisit une initialisation quelconque $\hat{x}_0$ des grandeurs intervenant dans le mode simplifié.

On choisit une fonction de vraisemblance s'appliquant à une estimation de trajectoire : $f(\hat{x}_0(\beta), \hat{x}_1(\beta), ..., \hat{x}_t(\beta))$

Les étapes suivantes sont répétées au cours du temps :

- Étape de propagation (PROP)

Les mesures inertielles sont utilisées pour calculer l'étape de propagation de $\hat{x}_t(\beta_0)$ par le modèle simplifié, ainsi que la matrice $P_t$. L'équation vérifiée par $\hat{x}_t(\beta)$ est linéarisée autour de $\beta_0$ pour faire évoluer récursivement l'application affine $Ax_t : \beta \rightarrow \tilde{x}_t(\beta)$, qui est le développement au premier ordre de $\hat{x}_t(\beta)$ autour de $\beta_0$. $Ax_t$ est par exemple représenté par une matrice.

- Étape de mise à jour (MAJ) :

L'information a priori sur la trajectoire est utilisée pour mettre à jour $\hat{x}_t(\beta_0)$ par la méthode décrite dans le modèle simplifié. L'équation de mise à jour de $\hat{x}_t(\beta)$ est la même que celle de $\hat{x}_t(\beta_0)$ (c'est une spécificité du filtre de Kalman invariant), elle est utilisée pour mettre à jour son développement au premier ordre $Ax_t$.

- Étape de perturbation (PERT) :

Cette étape peut être appliquée une seule fois à la fin de l'alignement, à différents instants au cours de l'alignement ou à chaque pas de temps. Une estimation $\hat{\beta}$ de $\beta$ est obtenue par optimisation : $\hat{\beta} = argmin_\beta f(\tilde{x}_0(\beta), \tilde{x}_1(\beta),...,\tilde{x}_t(\beta))$. Une estimation raffinée $\tilde{x}$ de l'état $x$ est alors donnée par $\tilde{x}_t = Ax_t(\hat{\beta})$ ou une autre fonction de $\hat{\beta}$, équivalente à $Ax_t$ au premier ordre.

La fonction $f$ peut être quadratique. Il n'est alors pas nécessaire de stocker toutes les valeurs de $\hat{x}_t(\beta_0)$ ni de $Ax_t$.

La fonction $f$ peut faire intervenir des grandeurs supplémentaires calculées récursivement au cours du temps.

La fonction $f$ peut par exemple être définie par :

$$f\big(\tilde{x}_0(\beta), \tilde{x}_1(\beta), ..., \tilde{x}_t(\beta)\big) = \sum_{i=0}^{t} [\tilde{x}_t(\beta)]^T \left(\frac{\partial \mathrm{h}}{\partial \hat{x}_t(\beta_0)}\right)^T S_t^{-1} \frac{\partial \mathrm{h}}{\partial \hat{x}_t(\beta_0)} [\tilde{x}_t(\beta)]$$

Où $S_t$ est donnée par le mode simplifié et le symbole $T$ désigne la transposition matricielle.

Un autre exemple de choix de fonction $f$, utilisé dans la suite, est :

$$f\big(\tilde{x}_0(\beta), \tilde{x}_1(\beta), ..., \tilde{x}_t(\beta)\big) = \sum_{i=0}^{t} \left\|\frac{\partial \mathrm{h}}{\partial \hat{x}_t(\beta_0)} [\tilde{x}_t(\beta)]\right\|^2$$

Le calcul de $\hat{\beta}$ peut se faire une seule fois à la fin de l'alignement, à différents instants au cours de l'alignement ou en permanence au cours de l'alignement.

Une méthode d'optimisation récursive peut être employée pour calculer $\hat{\beta}$.

L'estimation $\hat{\beta}$ peut éventuellement être utilisée comme nouvelle valeur de référence pour la suite de l'alignement en posant $\beta_0 = \hat{\beta}$.

L'estimation raffinée $\tilde{x}_t(\hat{\beta})$ peut éventuellement être utilisée comme dernière estimation dans le modèle simplifié pour la suite de l'alignement en posant $\hat{x}_t(\beta_0) = \tilde{x}_t(\hat{\beta})$.

*Un exemple de mise en oeuvre du procédé est décrit ci-dessous* :

$\beta = \begin{pmatrix} \beta_1 \\ \beta_2 \end{pmatrix}$ est un vecteur de taille $6 \times 1$ contenant les dérives des trois gyroscopes ou gyromètres ($\beta_1$) et les biais des trois accéléromètres ($\beta_2$).

Les variables du mode simplifié sont l'orientation et la vitesse. Elles peuvent être écrites dans une matrice de déplacement $\chi_t = \begin{pmatrix} T_{[\frac{c}{m}]} & v_C \\ 0 & 1 \end{pmatrix}$.

On choisit $\beta_0 = 0$ comme valeur de référence des biais et dérives. Les mesures des capteurs inertiels sont donc utilisées sans modification dans le mode simplifié.

Si on tient compte des biais et dérives notés par $\beta$, l'estimation $\hat{\chi}_t(\beta) = \begin{pmatrix} \hat{T}_{[\frac{c}{m}]}(\beta) & \hat{v}_C(\beta) \\ 0 & 1 \end{pmatrix}$, dont seule une approximation au premier ordre autour d'une valeur de référence $\beta_0$ sera calculée, suit l'équation de propagation suivante :

$$\frac{d}{dt}\hat{\chi}_t(\beta) = \hat{\chi}_t(\beta).(\boldsymbol{i} - \boldsymbol{\beta}) + \boldsymbol{g}.\hat{\chi}_t(\beta)$$

Et l'équation de mise à jour suivante :

$$\hat{\chi}_t(\beta)^+ = exp\big(-L_t\hat{v}_t(\beta)\big)\hat{\chi}_t$$

où exp() est la carte exponentielle prenant en argument un vecteur de taille $6 \times 1$ et rendant une matrice de déplacement. $\beta$ est la matrice de déplacement élémentaire suivante :

$$\boldsymbol{\beta} = \begin{pmatrix} A(\beta_1) & \beta_2 \\ 0 & 1 \end{pmatrix}$$

La matrice de gain $L_t$ est donnée par le mode simplifié.
Une façon simple d'écrire l'estimation au premier ordre de $\hat{\chi}_t(\beta)$ est :

$$\tilde{\chi}_t(\beta) = \hat{\chi}_t(0) + \hat{\chi}_t(0)D(Z_t\beta)$$

où $D()$ est l'application linéaire prenant en argument un vecteur $x = \begin{pmatrix} x_1 \\ x_2 \end{pmatrix}$ de taille $6 \times 1$ et rendant la matrice de déplacement élémentaire $\begin{pmatrix} A(x_1) & x_2 \\ 0 & 1 \end{pmatrix}$ de taille $4 \times 4$. La matrice $Z_t$ est de taille $6 \times 6$ et vérifie l'équation de propagation suivante :

$$\frac{d}{dt}Z_t = ad_iZ_t - I_6$$

Et l'équation de mise à jour suivante :

$$Z_t^+ = I_6 - Ad_{\hat{\chi}_t^{+-1}}Dexp\big(-L_t\mathcal{V}(\hat{\chi}_t)\big)L_t\begin{pmatrix} 0 & \hat{T}_{\left[\frac{c}{m}\right]} \end{pmatrix}Z_t$$

Où la matrice $L_t$ est donnée par le mode simplifié, les matrices de déplacement $\hat{\chi}_t$ et $\hat{\chi}_t^+$ sont données par le mode simplifié, la matrice de rotation $\hat{T}_{\left[\frac{c}{m}\right]}$ est donnée par le mode simplifié, la matrice $ad_i$ est définie par

$$ad_i = \begin{pmatrix} A(\omega_t) & 0 \\ A(f_t) & A(\omega_t) \end{pmatrix}$$ ($\omega_t$ et $f_t$ sont les mesures des capteurs inertiels), la matrice $Ad_{\hat{\chi}_t^{+-1}}$ est définie par

$$Ad_{\hat{\chi}_t^{+-1}} = \begin{pmatrix} \left(\hat{T}_{\left[\frac{c}{m}\right]}^+\right)^T & 0 \\ A\left(-\left(\hat{T}_{\left[\frac{c}{m}\right]}^+\right)^T\hat{v}_t^+\right)\left(\hat{T}_{\left[\frac{c}{m}\right]}^+\right)^T & \left(\hat{T}_{\left[\frac{c}{m}\right]}^+\right)^T \end{pmatrix},$$

la fonction $v$ prend en argument une matrice de déplacement de taille $4 \times 4$ (ici la matrice $\hat{\chi}_t = \begin{pmatrix} \hat{T}_{\left[\frac{c}{m}\right]} & \hat{v}_t \\ 0 & 1 \end{pmatrix}$) et rend le vecteur de taille $3 \times 1$ situé en haut à droite (ici $\hat{v}_t$). La fonction Dexp est la dérivée de la carte exponentielle au sens suivant :

$$exp(\xi + u) = [I_4 + D(Dexp(\xi)u)]exp(\xi)$$

où $\xi$ et $u$ sont des vecteurs de taille 3, u est de norme très inférieure à 1, $I_4$ est la matrice identité de taille 4 et Dexp($\xi$)

est une matrice de taille $6 \times 6$.

La fonction de vraisemblance choisie est définie par la formule suivante :

$$f\big(\tilde{x}_0(\beta), \tilde{x}_1(\beta), \dots, \tilde{x}_t(\beta)\big) = \sum_{i=0}^{t} \left\| \frac{\partial h}{\partial \hat{x}_t(\beta_0)} [\tilde{x}_t(\beta)] \right\|^2$$

Elle se réécrit :

$$f\big(\tilde{x}_0(\beta), \tilde{x}_1(\beta), \dots, \tilde{x}_t(\beta)\big) = \sum_{i=0}^{t} \left\| -\hat{T}_{\left[\frac{C}{m}\right]}^T \hat{v}_C - [A\left(\hat{T}_{\left[\frac{C}{m}\right]}^T \hat{v}_C\right), I_3] Z_t \beta \right\|^2$$

Il n'est donc pas nécessaire de stocker des informations sur toute la trajectoire, il suffit d'écrire $f(\beta) = \beta^T S_1 \beta + S_2^T \beta + constante$ et d'entretenir les matrices $S_1$ et $S_2$ en développant l'expression de *f*.

L'algorithme complet (mode simplifié et mode complet) est donc le suivant :

La valeur de référence des biais et dérives est $\beta_0 = 0$. L'estimation initiale $\hat{\chi}_0(0)$ et la matrice de covariance P (représentant l'incertitude) sont initialisées d'une façon quelconque pouvant dépendre de la situation. La matrice $Z_t$ représentant le développement au premier ordre de $\hat{\chi}_t(\beta)$ est initialisée à $Z_0 = 0_{6\times6}$. Les matrices $S_1$ et $S_2$ sont initialisées à $S_1 = 0_{6\times6}$ et $S_2 = 0_{6\times1}$.

Puis les étapes suivantes sont itérées pendant toute la durée de l'alignement :

- Étape de propagation (PROP) :

Propagation de l'incertitude :

$$\dot{P}_t = ad_{g_t} P_t + P_t \, ad_{g_t}^T + Q$$

Propagation de l'estimation :

$$\frac{d}{dt}\hat{\chi}_t(0) = \hat{\chi}_t(0).\boldsymbol{i} + \boldsymbol{g_t}.\hat{\chi}_t(\beta_0)$$

Propagation du développement au premier ordre :

$$\frac{d}{dt}Z_t = ad_i Z_t - I_6$$

- Étape de mise à jour (MAJ) aux temps $t_t$ :

Mise à jour de l'incertitude :

$$S_t = HP_{t_t}H^T + R$$

$$L_t = P_{t_t}H^T S_t^{-1}$$

$$P_{t_t}^+ = (I_6 - k_t H)P_{t_t}$$

Mise à jour de l'estimation :

$$\hat{\chi}_t^+(0) = exp\big(L_t \hat{v}_t^+(0)\big)\hat{\chi}(0)$$

Mise à jour du développement au premier ordre :

$$Z_t^+ = I_6 - Ad_{\hat{\chi}_t^{+-1}} Dexp\big(-L_t \mathcal{V}(\hat{\chi}_t)\big)L_t \begin{pmatrix} 0 & \hat{T}_{\left[\frac{C}{m}\right]}^T \end{pmatrix} Z_t$$

$$S_1 = S_1 + \left(\left[A\left(\hat{T}_{\left[\frac{C}{m}\right]}^T(0)^T \hat{v}_C(0)\right), I_3\right] Z_t\right)^T \left(\left[A\left(\hat{T}_{\left[\frac{C}{m}\right]}^T{}^T \hat{v}_C(0)\right), I_3\right] Z_t\right)$$

$$S_2 = S_2 + \left(\left[A\left(\hat{T}_{\left[\frac{C}{m}\right]}^T(0)^T \hat{v}_C(0)\right), I_3\right] Z_t\right)^T \hat{T}_{\left[\frac{C}{m}\right]}^T \hat{v}_C(0)$$

- Étape de perturbation (PERT) :

Estimation des biais et dérives :

$\hat{\beta}$ est la solution du système linéaire $S_1\hat{\beta} = -\frac{1}{2}S_2.$

Estimation raffinée des grandeurs du mode simplifié :

$$\tilde{\chi}_t(\hat{\beta}) = \hat{\chi}_t exp(Z_t\hat{\beta})$$

La fonction *exp* peut être remplacée par une autre fonction équivalente au premier ordre.

*Autres modes de mise en oeuvre*

Pour améliorer la robustesse et les performances de la méthode, on peut utiliser plusieurs fois en parallèle le procédé décrit, initialisé sur des orientations différentes puis sélectionner une ou plusieurs des estimations obtenues. Différents critères de sélection sont envisageables.

Pour ne pas augmenter la charge de calcul liée à l'étape de propagation, on peut résoudre les équations vérifiées par $\hat{\chi}_t$ et $Z_t$ sous une forme générique du type :

$$G_{t\to t} = I_4 \quad , \quad \frac{d}{dT}G_{t\to T} = \boldsymbol{g_t}.G_{t\to T} \qquad (1)$$

$$J_{t\to t} = I_4 \quad , \quad \frac{d}{dT}J_{t\to T} = J_{t\to T}.\boldsymbol{i} \qquad (2)$$

$$A_{t\to t} = I_4 \quad , \quad \frac{d}{dT}A_{t\to T} = -A_{t\to T}\,ad_i \qquad (3)$$

$$B_{t\rightarrow t} = 0 \quad , \quad \frac{d}{dT}B_{t\rightarrow T} = -A_{t\rightarrow T} \quad\quad (4)$$

$$\hat{\chi}_T = G_{t\rightarrow T}\ \hat{\chi}_t\ J_{t\rightarrow T} \quad\quad (5)$$

$$Z_T = A_{t\rightarrow T}^{-1}(Z_t + B_{t\rightarrow T}) \quad\quad (6)$$

Les équations (1), (2), (3) et (4) sont calculées une seule fois lors de l'étape de propagation, les équations (5) et (6) appliquées aux grandeurs $\hat{\chi}$ et $Z$ associées à chacun des filtres fonctionnant en parallèle, au début de l'étape de mise à jour. On peut de plus utiliser les mêmes gains pour tous les filtres.

La sélection de l'estimation se fait en calculant un critère de vraisemblance pour chacun des filtres puis en sélectionnant le meilleur résultat. Ce critère peut être par exemple une fonction quadratique des estimations de vitesse au cours du temps.

Également, plusieurs estimations peuvent être retenues sur un critère de cohérence, par exemple les deux (ou plus) donnant les résultats les plus proches. On choisit ensuite comme estimation finale l'une d'entre elles ou une fonction quelconque de ces estimations, par exemple une moyenne.

Par ailleurs, toutes les méthodes décrites peuvent être réalisées en remplaçant l'observation virtuelle de vitesse par une observation virtuelle de position. L'état simplifié contient alors aussi la position et est placé dans une matrice de la forme :

$$\chi = \begin{pmatrix} T_{[C/m]} & v_C & x_C \\ 0_{1\times 3} & 1 & 0 \\ 0_{1\times 3} & 0 & 1 \end{pmatrix}$$

La fonction d'observation devient :

$$h(\chi) = \chi^{-1}\begin{pmatrix} w_h \\ 0 \\ 1 \end{pmatrix}$$

Le reste des calculs est mené de la même façon que pour une observation de vitesse nulle.

En variante encore, toutes les méthodes décrites peuvent être réalisées en représentant les données d'une quelconque autre façon. On pourrait par exemple paramétrer les orientations par des quaternions ou des angles d'Euler et transposer tous les calculs.

Également, les fonctions de gain $K_n(.)$ peuvent être choisies par une quelconque autre méthode que celle proposée. On peut par exemple appliquer une procédure de type Unscented Kalman Filter à l'équation d'erreur non linéaire, utiliser des gains constants optimisés sur des simulations, etc.

En outre, une quelconque méthode d'initialisation peut être ajoutée au début de la procédure d'alignement. On peut par exemple utiliser les accéléromètres pour rechercher la verticale.

Les méthodes décrites peuvent être intégrées à une architecture plus large, par exemple des filtres de Kalman étendus fédérés, une banque de filtres de Kalman, etc.

Par ailleurs, si la centrale inertielle n'est pas placée au même endroit que le point sur lequel porte l'information de position mais que ce point est fixe et connu dans le référentiel de la centrale (par exemple si le récepteur GPS est éloigné de la centrale), on peut appliquer la même procédure que pour l'alignement par observation virtuelle de déplacement nul, en remplaçant zéro par la position connue (le bras de levier séparant les deux récepteurs dans le cas d'un GPS et d'une centrale).

**Revendications**

1. Procédé d'alignement d'un porteur (P) mobile dans un repère inertiel (Ri) et comprenant une centrale inertielle (IN), la centrale inertielle comprenant une pluralité de capteurs inertiels (RV, RO) et au moins un filtre de Kalman invariant, le procédé comprenant la répétition des étapes suivantes pour estimer un état du porteur (P) représentatif de sa vitesse et de son orientation:

- Propagation (PROP) déterminant un état estimé courant à partir d'un état estimé précédent et des mesures des capteurs inertiels,
- Mise à jour (MAJ) de l'état estimé grâce à l'information a priori sur la trajectoire du porteur (P),

le procédé étant **caractérisé en ce que**, pour permettre un traitement par au moins un filtre de Kalman invariant, on met en oeuvre un mode simplifié dans lequel les biais des capteurs ne sont pas estimés lors d'étapes de propagation et de mise à jour, chaque vitesse intervenant dans les équations de mise à jour étant exprimée dans un repère de travail (Rt) translaté par rapport au repère inertiel (Ri) et dont l'origine se déplace le long d'une trajectoire inertielle de référence dont le porteur est supposé proche.

2. Procédé selon la revendication précédente, **caractérisé en ce que** les équations de propagation font intervenir une variable de gravité qui dépend seulement du temps.

3. Procédé selon l'une des revendications précédentes, **caractérisé en ce que** la trajectoire inertielle de référence est construite à partir d'une information a priori qui n'est pas mesurée par les capteurs inertiels.

4. Procédé selon l'une des revendications précédentes, **caractérisé en ce que** dans le mode simplifié, chaque position intervenant dans les équations de mise à jour est exprimée dans un repère de travail (Rt) translaté par rapport au repère inertiel (Ri).

5. Procédé selon l'une des revendications précédentes, **caractérisé en ce qu'**on met également en oeuvre en parallèle un traitement dans lequel on estime des grandeurs supplémentaires influant sur l'estimation de la façon suivante :

- à chaque instant, la différentielle par rapport aux grandeurs supplémentaires de l'estimation fournie par le mode simplifié est calculée récursivement.
- les grandeurs supplémentaires sont calculées par optimisation d'un critère de qualité de l'estimation.

6. Procédé selon la revendication 5, selon lequel le calcul des grandeurs supplémentaires par optimisation d'un critère de qualité est mis en oeuvre à la fin dudit procédé d'alignement.

7. Procédé selon la revendication 5, selon lequel le calcul des grandeurs supplémentaires par optimisation d'un critère de qualité est mis en oeuvre en permanence ou à un ou plusieurs instants du procédé d'alignement.

8. Procédé d'alignement selon l'une des revendications précédentes, dans lequel une série de gains est calculée avant la mise en oeuvre de façon répétée des étapes de propagation et de mise à jour (MAJ) mode simplifié, chaque gain intervenant dans une itération de l'étape de mise à jour.

9. Procédé selon l'une des revendications 1 à 8, **caractérisée en ce que** l'origine du repère de travail suit une trajectoire GPS.

10. Centrale inertielle (IN) mobile dans un repère inertiel (Ri) et comprenant :

- une pluralité de capteurs (CV, CO) inertiels,
- au moins un filtre de Kalman invariant,

un calculateur embarqué de ladite centrale mettant en oeuvre la répétition des étapes suivantes pour estimer un état du porteur (P) représentatif de sa vitesse et de son orientation:

• Propagation (PROP) déterminant un état estimé courant à partir d'un état estimé précédent et des mesures des capteurs inertiels,
• Mise à jour (MAJ) de l'état estimé grâce à l'information a priori sur la trajectoire du porteur (P),

**caractérisé en ce que**, pour permettre un traitement par le filtre de Kalman invariant, le calculateur est configuré pour mettre en oeuvre un procédé d'alignement selon l'une des revendications 1 à 9.

**11.** Produit programme d'ordinateur **caractérisé en ce qu'**il comprend des instructions de code de programme pour l'exécution des étapes du procédé selon l'une des revendications 1 à 9, lorsque ce programme est exécuté par un calculateur embarqué dans une centrale inertielle, peut par ailleurs être mis en oeuvre.

**Patentansprüche**

**1.** Verfahren zum Ausrichten eines mobilen Trägers (P) in einem Trägheitsbezugspunkt (Ri) und ein Trägheitssystem (IN) umfassend, wobei das Trägheitssystem eine Vielzahl von Trägheitssensoren (RV, RO) und zumindest einen unveränderlichen Kalman-Filter umfasst, wobei das Verfahren die Wiederholung der folgenden Schritte zum Schätzen eines Zustands des Trägers (P) umfasst, der repräsentativ für seine Geschwindigkeit und seine Orientierung ist:

- Ausbreitung (PROP), die einen geschätzten aktuellen Zustand aus einem vorherigen geschätzten Zustand und Messungen der Trägheitssensoren bestimmt,
- Aktualisierung (MAJ) des geschätzten Zustands dank der A-Priori-Information über die Trajektorie des Trägers (P),

wobei das Verfahren **dadurch gekennzeichnet ist, dass** man, um eine Behandlung durch zumindest einen unveränderlichen Kalman-Filter zu erlauben, einen vereinfachten Modus anwendet, bei dem die Schrägen der Sensoren bei den Schritten der Ausbreitung und Aktualisierung nicht geschätzt werden, wobei jede Geschwindigkeit, die in den Aktualisierungsgleichungen zur Anwendung kommt, in einem Arbeitsbezugspunkt (Rt) zum Ausdruck gebracht wird, der im Verhältnis zum Trägheitsbezugspunkt (Ri) verschoben ist, und dessen Ursprung sich entlang einer Bezugs-Trägheitstrajektorie bewegt, deren Träger als naheliegend angenommen wird.

**2.** Verfahren nach dem vorstehenden Anspruch, **dadurch gekennzeichnet, dass** die Ausbreitungsgleichungen eine Schwerkraftvariable zur Anwendung bringen, die nur von der Zeit abhängig ist.

**3.** Verfahren nach einem der vorstehenden Ansprüche, **dadurch gekennzeichnet, dass** die Bezugs-Trägheitstrajektorie aus einer A-Priori-Information aufgebaut wird, die nicht von den Trägheitssensoren gemessen wird.

**4.** Verfahren nach einem der vorstehenden Ansprüche, **dadurch gekennzeichnet, dass** in dem vereinfachten Modus jede Position, die in den Aktualisierungsgleichungen zur Anwendung kommt, in einem Arbeitsbezugspunkt (Rt) zum Ausdruck gebracht wird, der im Verhältnis zum Trägheitsbezugspunkt (Ri) verschoben ist.

**5.** Verfahren nach einem der vorstehenden Ansprüche, **dadurch gekennzeichnet, dass** man auch parallel dazu eine Behandlung anwendet, bei der man zusätzliche Größen schätzt, die die Schätzung in der folgenden Art und Weise beeinflussen:

- die Differenz im Verhältnis zu den zusätzlichen Größen der Schätzung, die durch den vereinfachten Modus zur Verfügung gestellt wird, wird zu jeder Zeit rekursiv berechnet.
- die zusätzlichen Größen werden durch Optimierung eines Qualitätskriteriums der Schätzung berechnet.

**6.** Verfahren nach Anspruch 5, wobei die Berechnung der zusätzlichen Größen durch Optimierung eines Qualitätskriteriums am Ende des Verfahrens zum Ausrichten angewendet wird.

**7.** Verfahren nach Anspruch 5, wobei die Berechnung der zusätzlichen Größen durch Optimierung eines Qualitätskriteriums permanent oder in einem oder mehreren Momenten des Verfahrens zum Ausrichten angewendet wird.

**8.** Verfahren zum Ausrichten nach einem der vorstehenden Ansprüche, wobei eine Reihe von Verstärkungen vor der Anwendung in wiederholter Form der Schritte zur Ausbreitung und Aktualisierung (MAJ) vereinfachter Modus berechnet wird, wobei jede Verstärkung in einer Iteration des Schrittes zur Aktualisierung zur Anwendung kommt.

**9.** Verfahren nach einem der Ansprüche 1 bis 8, **dadurch gekennzeichnet, dass** der Ursprung des Arbeitsbezugspunkts einer GPS-Trajektorie folgt.

**10.** Trägheitssystem (IN), in einem Trägheitsbezugspunkt (Ri) mobil, und umfassend:

- eine Vielzahl von Trägheitssensoren (CV, CO),

- zumindest einen unveränderlichen Kalman-Filter,

wobei ein eingebauter Rechner des Systems die Wiederholung der folgenden Schritte anwendet, um einen Zustand des Trägers (P) zu schätzen, der repräsentativ für seine Geschwindigkeit und seine Orientierung ist:

-- Ausbreitung (PROP), die einen geschätzten aktuellen Zustand aus einem vorherigen geschätzten Zustand und Messungen der Trägheitssensoren bestimmt,
-- Aktualisierung (MAJ) des geschätzten Zustands dank der A-Priori-Information über die Trajektorie des Trägers (P),

**dadurch gekennzeichnet ist, dass** der Rechner, um eine Behandlung durch den unveränderlichen Kalman-Filter zu erlauben, konfiguriert ist, um ein Verfahren zum Ausrichten nach einem der Ansprüche 1 bis 9 anzuwenden.

11. Computerprogrammprodukt, **dadurch gekennzeichnet, dass** es Programmcodebefehle zur Ausführung der Schritte des Verfahrens nach einem der Ansprüche 1 bis 9 umfasst, wenn dieses Programm durch einen in einem Trägheitssystem eingebauten Rechner ausgeführt wird, darüber hinaus angewendet werden kann.

**Claims**

1. Method for aligning a carrier device (P) moving in an inertial reference frame (Ri) and comprising an inertial measurement unit (IN), the inertial measurement unit comprising a plurality of inertial sensors (RV, RO) and at least one invariant Kalman filter, the method comprising repeating the following steps for estimating a state of the carrier device (P) representative of its speed and its orientation:

- a propagation step (PROP) determining an estimated current state from a preceding estimated state and measurements of the inertial sensors,
- an update step updating (MAJ) the estimated state by means of the information a priori on the trajectory of the carrier device (P),

the method being **characterized in that**, to allow processing by at least one invariant Kalman filter, a simplified mode is implemented in which biases of the sensors are not estimated during propagation and updating steps, each speed occurring in the updating equations being expressed in a work reference frame (Rt) translated relative to the inertial reference frame (Ri) and whereof the origin moves along an inertial reference trajectory whereof the carrier device is deemed close.

2. Method according to the preceding claim, **characterized in that** the propagation equations involve a gravity variable which depends only on time.

3. Method according to one of the preceding claims, **characterized in that** the inertial reference trajectory is constructed from information a priori which is not measured by the inertial sensors.

4. Method according to one of the preceding claims, **characterized in that**, in the simplified mode, each position occurring in the updating equations is expressed in a work reference frame (Rt) translated relative to the inertial reference frame (Ri).

5. Method according to one of the preceding claims, **characterized in that** processing is also carried out in parallel in which additional quantities influencing the estimation are estimated in the following way:

- at each instant, the differential relative to the additional quantities of the estimation provided by the simplified mode is calculated recursively,
- the additional quantities are calculated by optimization of a quality criterion of the estimation.

6. Method according to claim 5, according to which calculation of the additional quantities by optimization of a quality criterion is performed on completion of said alignment method.

7. Method according to claim 5, according to which calculation of the additional quantities by optimization of a quality criterion is conducted permanently or at one or more instants of the alignment method.

8. Alignment method according to one of the preceding claims, wherein a series of gains is calculated prior to repeated execution of the propagation and updating steps (MAJ) in simplified mode, each gain occurring in an iteration of the updating step.

9. Method according to one of claims 1 to 8, **characterized in that** the origin of the work reference frame follows a GPS trajectory.

10. Inertial measurement unit (IN) movable in an inertial reference frame (Ri) and comprising:

- a plurality of inertial sensors (CV, CO),
- at least one invariant Kalman filter,

an embedded computer of said unit performing repetition of the following steps for estimating a state of the carrier device (P) representative of its speed and its orientation:

-- a propagation step (PROP) determining an estimated current state from a preceding estimated state and measurements of the inertial sensors,
-- an update step updating (MAJ) the estimated state by means of the information a priori on the trajectory of the carrier device (P),

**characterized in that**, to allow processing by the invariant Kalman filter, the computer is configured to execute an alignment method according to one of claims 1 to 10.

11. A computer program product, **characterized in that** it comprises program code instructions for execution of the steps of the method according to one of Claims 1 to 9, when this program executed by a computer embedded in an inertial measurement unit, can also be implemented.

**FIG. 1**

**FIG. 2**

## FIG. 3A

## FIG. 3B

## FIG. 4

FIG. 5A

cap (mrad)

temps (s)

———— cap estimé par le filtre invariant
------------ cap estimé par la centrale (nav.optimale)
— — — enveloppe à 3 sigma

FIG. 5B

cap (mrad)

temps (s)

———— cap estimé par le filtre invariant
------------ cap estimé par la centrale (nav.optimale)
— — — enveloppe à 3 sigma

----- enveloppe à 3 sigma
——— erreur de cap

FIG. 6A

----- enveloppe à 3 sigma
——— erreur de cap

FIG. 6B

# FIG. 7

| Alignement du système simplifié en intégrant des observations virtuelles de déplacement et/ou vitesse nulle par filtrage de Katman invariant |
| Alignement du système complet par optimisation quadratique |

Alignement fin

→ **Temps**

METHODE CLASSIQUE

| Evaluation approximative de l'état du système par une méthode quelconque | Alignement du système complet en intégrant des observations virtuelles de déplacement et/ou vitesse nulle par filtrage de Kalman étendu |

Recherche de verticale     Alignement grossier     Alignement fin

EP 3 071 934 B1

**EP 3 071 934 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1862764 A
- US 2004150557 A1